# EUROPEAN PATENT SPECIFICATION

(11) **EP 3 432 674 B1**
(45) Date of publication and mention of the grant of the patent: **07.07.2021**
(21) Application number: 16902644.0
(22) Date of filing: 23.05.2016
(51) Int. Cl.: H04W 74/00, H04W 74/08, H04W 16/14

(54) **DATA TRANSMISSION METHODS**
DATENÜBERTRAGUNGSVERFAHREN
PROCÉDÉS DE TRANSMISSION DE DONNÉES

(43) Date of publication of application: 23.01.2019
(73) Proprietor: Huawei Technologies Co., Ltd., Longgang Shenzhen, Guangdong 518129 (CN)
(72) Inventor: LI, Xiaocui, Shenzhen Guangdong 518129 (CN); XU, Kai, Shenzhen Guangdong 518129 (CN)
(74) Representative: Gill Jennings & Every LLP
(86) International application number: PCT/CN2016/083002
(87) International publication number: WO 2017/201654

(56) References cited:
- WO-A1-2015/174437
- WO-A1-2016/006449
- CN-A- 105 592 468
- US-A1- 2016 073 344
- ZTE: "UL framework for LAA", 3GPP DRAFT; R1-156994 UL FRAMEWORK FOR LAA, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Anaheim, USA; 20151115 - 20151122 15 November 2015 (2015-11-15), XP051003305, Retrieved from the Internet: URL:http://www.3gpp.org/ftp/Meetings_3GPP_ SYNC/RAN1/Docs/ [retrieved on 2015-11-15]
- LG ELECTRONICS: "LBT schemes in LAA UL", 3GPP DRAFT; R1-160630 UL LBT, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. St Julian's, Malta; 20160215 - 20160219 6 February 2016 (2016-02-06), XP051064267, Retrieved from the Internet: URL:http://www.3gpp.org/ftp/tsg_ran/WG1_RL 1/TSGR1_84/Docs/ [retrieved on 2016-02-06]

## Description

### TECHNICAL FIELD

The present invention relates to the communications field, and in particular, to data transmission methods.

### BACKGROUND

Spectrums used by a wireless communications system are classified into two types: licensed spectrums (licensed spectrum) and unlicensed spectrums (unlicensed spectrum). For a commercial mobile communications system, an operator needs to bid for a licensed spectrum, and after obtaining the licensed spectrum, the operator may carry out a mobile communications operation activity by using the corresponding spectrum. The unlicensed spectrum does not need to be bid for, and any device, for example, a wireless fidelity (Wireless-Fidelity, WiFi) device in frequency bands of 2.4 GHz and 5 GHz, can legally use these frequency bands.

In a licensed-assisted access using Long Term Evolution (English: Licensed-Assisted Access Using Long Term Evolution, LAA-LTE for short) system, an LAA-LTE node such as a network device or a terminal device needs to use a channel resource by using a listen before talk principle (English: listen before talk, LBT for short).

Currently, there are mainly two manners for 3GPP-related licensed-assisted access (Licensed-Assisted Access, LAA) uplink transmission:

In a first manner, the network device performs an LBT operation, that is, the network device preempts a channel through LBT. If preempting the channel, the network device sends uplink grant information (UL grant) to the terminal device and pads (padding) the channel until the terminal device performs uplink transmission. In this manner, even if the network device preempts the channel and sends the UL grant to the terminal device, the network device further needs to perform padding, and the terminal device cannot immediately perform uplink transmission. Instead, the terminal device performs uplink transmission only when the terminal device can send uplink data, causing low transmission efficiency.

In a second manner, the terminal device performs an LBT operation, that is, after receiving a UL grant, the terminal device preempts a channel through LBT. If the channel is idle, the terminal device preempts the channel, and sends uplink data based on scheduling of the network device. If the terminal device does not preempt the channel, the terminal device gives up transmission this time. In this manner, although the UL grant is transmitted in a downlink, the terminal device may not preempt the channel and cannot immediately perform uplink transmission, causing low transmission efficiency.

Therefore, how to improve data transmission efficiency in an LAA system becomes a problem that needs to be urgently resolved.

ZTE: "UL framework for LAA", 3GPP DRAFT; R1-156994 UL FRAMEWORK FOR LAA, 3RD GENERATION PARTNERSHIP PROJECT (3GPP) describes the principles of UL channel access and UL forward compatibility mechanisms and other issues when unlicensed carrier supports DL/UL operation.

### SUMMARY

Embodiments of the present invention provide data transmission methods. The invention is defined by the appended independent claims and further embodiments are described by the dependent claims.

According to a first aspect, a data transmission method is provided. The method is applied to a licensed-assisted access LAA system, and the method includes:
generating, by a network device, indication information, where the indication information is used to instruct a terminal device to directly transmit uplink data on a channel resource without performing LBT, the channel resource is an unlicensed spectrum resource preempted by the network device through listen before talk LBT, and a first time interval between a moment at which transmission of downlink data on the channel resource ends and a moment at which the terminal device is scheduled to start the transmission of the uplink data is less than or equal to a preset time interval; and
sending, by the network device, the indication information to the terminal device; wherein the maximum channel occupancy time is T, a time for which the network device transmits the downlink data on the channel resource is T1, the first time interval is T2, and the preset time interval is T3, such that a sum of duration of the transmission of the downlink data on the channel resource and the first time interval is less than a maximum channel occupancy time in the LAA system; and the network device generates the indication message only when T2<T3 and (T1+T2)<T.

Therefore, in this embodiment of the present invention, when determining that the first time interval is less than or equal to the preset time interval, the network device generates the indication information, and sends the indication information to the terminal device, so that the terminal device directly transmits the uplink data on the channel resource without performing LBT, as indicated by the indication information. Therefore, in this embodiment of the present invention, the terminal device may directly send the uplink data on the channel resource without performing LBT, so that a process of re-performing LBT during the transmission of the uplink data is avoided, thereby improving data transmission efficiency.

For example, the network device first preempts the unlicensed spectrum resource, namely, the channel resource, through LBT, and then transmits the downlink data to the terminal device by using the channel resource. If determining that the first time interval is less than or equal to the preset time interval (gap), the network device generates the indication information, to indicate that the terminal device may directly transmit the uplink data on the channel resource without performing LBT.

It should be understood that in this embodiment of the present invention, if the first time interval is within the preset time interval (gap), it may be considered that a status of a channel is relatively stable. In other words, if a downlink-to-uplink switching time is less than the preset time interval, it may be considered that the status of the channel is relatively stable. That is, if the first time interval is within a short time (that is, the first time interval is less than or equal to the gap time), the channel may continue to be used to transmit the uplink data. Therefore, in this embodiment of the present invention, the network device generates the indication information, to indicate that the terminal device may directly send the uplink data on the channel resource.

Therefore, in this embodiment of the present invention, when the first time interval is less than or equal to the preset time interval, the network device generates the indication information, to instruct the terminal device to directly transmit the uplink data on the channel resource without performing LBT, so that the process of re-performing LBT during the transmission of the uplink data is avoided, thereby improving the data transmission efficiency.

It should be understood that the preset time interval may be preset. For example, the preset time interval may be preset by a network system, or may be preconfigured. The preset time interval may alternatively be preset by the network device.

Optionally, a value range of the preset time interval is 10 µs to 100 µs.

For example, the preset time interval may be 16 µs, 25 µs, 50 µs, or the like. This embodiment of the present invention is not limited thereto.

Before generating the indication information, the network device further needs to determine that a sum of duration of the transmission of the downlink data on the channel resource and the first time interval is less than a maximum channel occupancy time in the LAA system.

The condition of generating the indication information is described above. Optionally, in this embodiment of the present invention, before generating the indication information, the network device may alternatively send Radio Resource Control (Radio Resource Control, RRC) signaling to the terminal device, and the RRC signaling is used to configure the terminal device to direct send the uplink data without performing LBT.

It should be understood that configuring, by using the RRC signaling, a capability of directly sending the uplink data without performing LBT for the terminal device is an optional step. In this embodiment of the present invention, the configuration may not be sent. A system may consider, by default, that the terminal device has the capability, that is, the terminal device has the capability of directly sending the uplink data without performing LBT. After receiving the indication information, the terminal device may directly transfer the uplink data.

Optionally, the sending, by the network device, the indication information to the terminal device includes:
sending, by the network device, the indication information to the terminal device by using a downlink control channel (Physical Downlink Control Channel, PDCCH).

For example, the network device sends the indication information to the terminal device by using the downlink control channel PDCCH.

Specifically, the network device may add one bit to downlink control information (Downlink Control Information, DCI) of the PDCCH. A value of the bit may be 0 or 1. If the first time interval is less than or equal to a value of the gap, a base station sets the value of the bit to 1, indicating that the UE may directly transmit the uplink data following the downlink data without performing LBT. If the base station discovers that the first time interval does not satisfy the foregoing condition, the value of the bit is 0, indicating that the UE needs to perform LBT.

Optionally, the sending, by the network device, the indication information to the terminal device includes:
sending, by the network device, the indication information by using a preset resource in the channel resource.

Optionally, the preset resource is a physical hybrid automatic repeat indicator channel (Physical Hybrid ARQ Indicator Channel, PHICH) resource in the channel resource.

For the LAA system, because the UE in LAA-LTE cannot always occupy the channel, HARQ retransmission is interrupted due to discontinuous transmission, and the network device retransmits a data packet only after the UE re-preempts the channel. A waiting time may be very long, causing a data delay. As a result, in the LAA system, an asynchronous HARQ operation is used in the uplink, and no PHICH is required, so that the PHICH resource is idle. Therefore, in this embodiment of the present invention, the PHICH channel resource may be used to notify the UE whether to perform an LBT operation.

Specifically, the network device preempts an unlicensed carrier, and sends the downlink data after successfully preempting the unlicensed carrier. The base station detects whether the first time interval is less than or equal to the value of the gap. If the first time interval is less than or equal to the value of the gap, the network device schedules the uplink data and notifies the UE by using the PHICH that the UE may directly send the uplink data following the downlink data without performing the LBT operation.

For example, the network device may add one bit to the PHICH. A value of the bit may be 0 or 1. If the first time interval is less than or equal to the value of the gap, the base station sets the value of the bit to 1, indicating that the UE may directly transmit the uplink data following the downlink data without performing LBT. If the base station discovers that the first time interval does not satisfy the foregoing condition, the value of the bit is 0, indicating that the UE needs to perform LBT.

Therefore, in this embodiment of the present invention, when determining that the first time interval is less than or equal to the preset time interval, the network device generates the indication information, and sends the indication information to the terminal device, so that the terminal device directly transmits the uplink data on the channel resource without performing LBT, as indicated by the indication information. Therefore, in this embodiment of the present invention, the terminal device may directly send the uplink data on the channel resource without performing LBT, so that the process of re-performing LBT during the transmission of the uplink data is avoided, thereby improving the data transmission efficiency.

According to a second aspect, a data transmission method is provided. The method is applied to a licensed-assisted access LAA system, and the method includes:
receiving, by a terminal device, indication information sent by a network device, where the indication information is used to instruct the terminal device to directly transmit uplink data on a channel resource without performing LBT, and the channel resource is an unlicensed spectrum resource preempted by the network device through listen before talk LBT and a first time interval between a moment at which transmission of downlink data on the channel resource ends and a moment at which the terminal device is scheduled to start the transmission of the uplink data is less than or equal to a preset time interval; and
directly transmitting, by the terminal device based on the indication information, the uplink data on the channel resource without performing LBT; wherein
the maximum channel occupancy time is T, a time for which the network device transmits the downlink data on the channel resource is T1, the first time interval is T2, and the preset time interval is T3, such that a sum of duration of the transmission of the downlink data on the channel resource and the first time interval is less than a maximum channel occupancy time in the LAA system; and the network device generates the indication message only when T2<T3 and (T1+T2)<T.

Therefore, in this embodiment of the present invention, when determining that a first time interval is less than or equal to a preset time interval, the network device generates the indication information, and sends the indication information to the terminal device, so that the terminal device directly transmits the uplink data on the channel resource without performing LBT, as indicated by the indication information. Therefore, in this embodiment of the present invention, the terminal device may directly send the uplink data on the channel resource without performing LBT, so that a process of re-performing LBT during the transmission of the uplink data is avoided, thereby improving data transmission efficiency.

It should be understood that the second aspect corresponds to the first aspect. In the first aspect, the data transmission method is described from the network device side, and in the second aspect, the data transmission method is described from the terminal device side. For related content of the second aspect and optional implementations of the second aspect, refer to the corresponding descriptions of the first aspect and the implementations of the first aspect.

, A sum of duration of transmission of downlink data on the channel resource and the first time interval is less than a maximum channel occupancy time in the LAA system, and the first time interval is a time interval between a moment at which the transmission of the downlink data on the channel resource ends and a moment at which the terminal device starts the transmission of the uplink data.

Optionally, the receiving, by a terminal device, indication information sent by a network device includes:
receiving, by the terminal device, the indication information sent by the network device by using a downlink control channel PDCCH.

Optionally, the receiving, by a terminal device, indication information sent by a network device includes:
receiving, by the terminal device, the indication information sent by the network device by using a preset resource in the channel resource.

Optionally, the preset resource is a PHICH resource in the channel resource.

Optionally, before the receiving, by a terminal device, indication information sent by a network device, the method further includes:
receiving, by the terminal device, RRC signaling sent by the network device, where the RRC signaling is used to configure the terminal device to direct send the uplink data without performing LBT.

Optionally, a value range of the preset time interval is 10 µs to 100 µs.

Therefore, when determining that the first time interval is less than or equal to the preset time interval, the network device generates the indication information, and sends the indication information to the terminal device, so that the terminal device directly transmits the uplink data on the channel resource without performing LBT, as indicated by the indication information. Therefore, in this embodiment of the present invention, the terminal device may directly send the uplink data on the channel resource without performing LBT, so that the process of re-performing LBT during the transmission of the uplink data is avoided, thereby improving the data transmission efficiency.

A data transmission method is provided. The method is applied to a licensed-assisted access LAA system, and the method includes:
determining, by a terminal device, that a first time interval is less than or equal to a preset time interval, where the first time interval is a time interval between a moment at which transmission of downlink data on a channel resource ends and a moment at which the terminal device starts transmission of uplink data, and the channel resource is an unlicensed spectrum resource preempted by the network device through listen before talk LBT; and
directly transmitting, by the terminal device, the uplink data on the channel resource without performing LBT.

Therefore, after determining that the first time interval is less than or equal to the preset time interval, the terminal device directly transmits the uplink data on the channel resource without performing LBT. In this embodiment of the present invention, the terminal device may directly send the uplink data on the channel resource without performing LBT, so that a process of re-performing LBT during the transmission of the uplink data is avoided, thereby improving data transmission efficiency.

It should be understood that if the first time interval is within the preset time interval (gap), it may be considered that a status of a channel is relatively stable. In other words, if a downlink-to-uplink switching time is less than the preset time interval, it may be considered that the status of the channel is relatively stable. That is, if the first time interval is within a short time (that is, the first time interval is less than or equal to the gap time), the channel may continue to be used to transmit the uplink data. Therefore, in this embodiment of the present invention, it may be determined that the first time interval is less than or equal to the preset time interval. The terminal device may directly send the uplink data on the channel resource.

It should be understood that the preset time interval may be preset. For example, the preset time interval may be preset by a network system, or may be preconfigured. The preset time interval may alternatively be preconfigured by the network device for the terminal device by using signaling. The preset time interval may alternatively be preset by the terminal device.

Optionally, a value range of the preset time interval is 10 µs to 100 µs.

For example, the preset time interval may be 16 µs, 25 µs, 50 µs, or the like, but is not limited thereto.

Optionally, the terminal device may further determine that a sum of duration of the transmission of the downlink data on the channel resource and the first time interval is less than a maximum channel occupancy time in the LAA system.

Therefore, after determining that the first time interval is less than or equal to the preset time interval, the terminal device directly transmits the uplink data on the channel resource without performing LBT. In this embodiment of the present invention, the terminal device may directly send the uplink data on the channel resource without performing LBT, so that the process of re-performing LBT during the transmission of the uplink data is avoided, thereby improving the data transmission efficiency.

A network device is provided. The network device is configured to perform the method according to any one of the first aspect and the possible implementations of the first aspect. Specifically, the network device includes units configured to perform the foregoing method.

A terminal device is provided. The terminal device is configured to perform the method according to any one of the second aspect and the possible implementations of the second aspect. Specifically, the terminal device includes units configured to perform the foregoing method.

A terminal device is provided. Specifically, the terminal device includes units configured to perform the foregoing method.

An LAA system is provided. The LAA system includes: a network device; and a terminal device.

A computer readable medium is provided. The computer readable medium is configured to store a computer program. The computer program includes an instruction configured to perform the method according to any one of the first aspect and the possible implementations of the first aspect.

A computer readable medium is provided. The computer readable medium is configured to store a computer program. The computer program includes an instruction configured to perform the method according to any one of the second aspect and the possible implementations of the second aspect.

### BRIEF DESCRIPTION OF DRAWINGS

To describe the technical solutions in the embodiments of the present invention more clearly, the following briefly describes the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a scenario diagram of a communications system to which an embodiment of the present invention is applicable;
FIG. 2 is a schematic flowchart of a data transmission method according to an embodimentof the present invention;
FIG. 3 is a schematic diagram of a channel resource according to an embodiment of the present invention;
FIG. 4 is a schematic flowchart of a data transmission method according to another embodiment of the present invention;
FIG. 5 is a schematic block diagram of a network device according to an embodiment of the present invention;
FIG. 6 is a schematic block diagram of a terminal device according to an embodiment of the present invention;
FIG. 7 is a schematic block diagram of a terminal device according to another embodiment of the present invention;
FIG. 8 is a schematic block diagram of a network device according to another embodiment of the present invention;
FIG. 9 is a schematic block diagram of a terminal device according to another embodiment of the present invention;
FIG. 10 is a schematic block diagram of a terminal device according to another embodiment of the present invention;
FIG. 11 is a schematic block diagram of an LAA system according to an embodiment of the present invention; and
FIG. 12 is a schematic block diagram of an LAA system according to another embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

A device in the embodiments of the present invention may be a device in a licensed-assisted access using Long Term Evolution (Licensed-Assisted Access Using Long Term Evolution, "LAA-LTE" for short) system, or may be a device in another system. This is not limited in the embodiments of the present invention.

It should be understood that the licensed spectrum-assisted access using Long Term Evolution (LAA-LTE) system may also be referred to as a Long Term Evolution in unlicensed spectrum (Long Term Evolution Unlicensed spectrum, "LTE-U" for short) system.

It should further be understood that, a network device may be a base transceiver station (Base Transceiver Station, BTS) in a GSM system or a Code Division Multiple Access (Code Division Multiple Access, CDMA) system, a NodeB (NodeB, NB) in a WCDMA system, an evolved NodeB (Evolutional Node B, eNB or eNodeB) in an LTE system, or a radio controller in a cloud radio access network (Cloud Radio Access Network, CRAN). Alternatively, the network device may be a relay station, an access point, an in-vehicle device, a wearable device, a network side device in a future 5G network, a network device in a future evolved public land mobile network (Public Land Mobile Network, PLMN), or the like.

A terminal device may be an access terminal, user equipment (User Equipment, UE), a user unit, a user station, a mobile station, a mobile console, a remote station, a remote terminal, a mobile device, a user terminal, a terminal, a wireless communications device, a user agent, a user apparatus, or the like. The access terminal may be a cellular phone, a cordless phone, a Session Initiation Protocol (Session Initiation Protocol, SIP) phone, a wireless local loop (Wireless Local Loop, WLL) station, a personal digital assistant (Personal Digital Assistant, PDA), a handheld device having a wireless communication function, a computing device, another processing device connected to a wireless modem, an in-vehicle device, a wearable device, a terminal device in a future 5G network, or a terminal device in a future evolved public land mobile network (Public Land Mobile Network, PLMN).

For ease of understanding and description, execution processes and actions of a data transmission method and device in this application in a network system are described below as examples rather than limitations.

It should be understood thatonly the LAA-LTE system is used as an example for description, and the present invention is not limited thereto. The method and the apparatus - may further be applied to another communications system. Similarlyonly a base station and UE in the LAA-LTE system are used as an example for description, and the present invention is not limited thereto. The method and the apparatus may further be applied to a base station in another communications system.

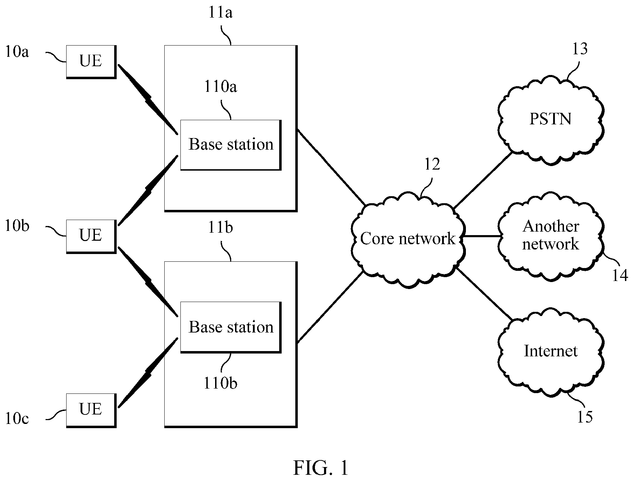

FIG. 1 is a scenario diagram of a communications system. In FIG. 1, a network device communicates with a terminal device by using an unlicensed spectrum resource. In FIG. 1, an example in which the network device is a base station and the terminal device is UE is used for description. For example, in FIG. 1, UE 10a may communicate with a base station 110a in a radio access network, or may communicate with a core network 12 by using the base station 110a in the radio access network 11a. Similarly, UE 10b may communicate with the base station 110a in the radio access network or a base station 110b, or may communicate with the core network 12 by using the base station 110a in the radio access network 11a or by using the base station 110b in a radio access network 11b. UE 10c may communicate with the base station 110b in the radio access network, or may communicate with the core network 12 by using the base station 110b in the radio access network 11b. Further, the terminal device may communicate with a public switched telephone network (Public Switched Telephone Network, "PSTN" for short) 13, or another network 14, or even entire Internet 15.

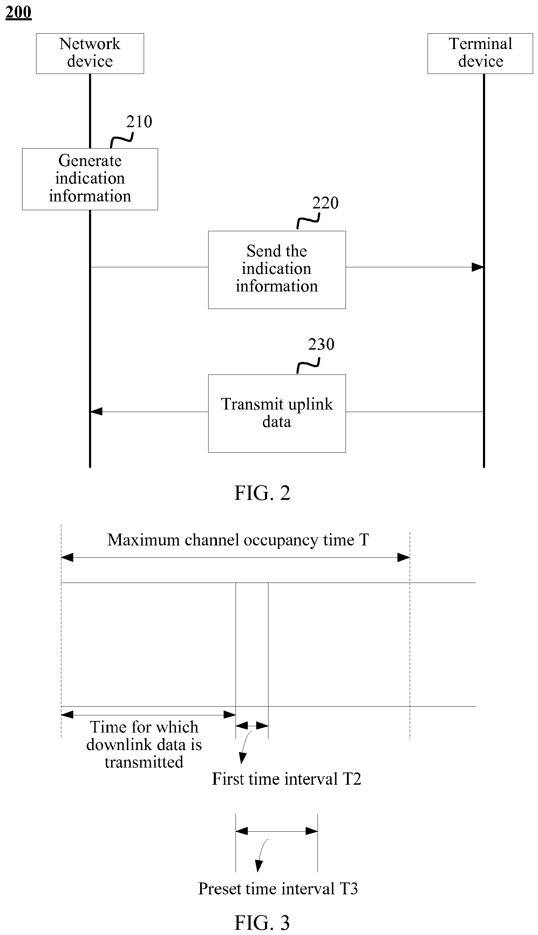

FIG. 2 is a schematic flowchart of a data transmission method. The method shown in FIG. 2 may be applied to the communications system in FIG. 1. Specifically, the method 200 shown in FIG. 2 includes the following steps.

210: A network device generates indication information.

Specifically, the network device generates the indication information. The indication information is used to instruct a terminal device to directly transmit uplink data on a channel resource without performing LBT, the channel resource is an unlicensed spectrum resource preempted by the network device through listen before talk LBT, and a first time interval between a moment at which transmission of downlink data on the channel resource ends and a moment at which the terminal device is scheduled to start the transmission of the uplink data is less than or equal to a preset time interval.

For example, the network device first preempts the unlicensed spectrum resource, namely, the channel resource, through LBT, and then transmits the downlink data to the terminal device by using the channel resource. If determining that the first time interval is less than or equal to the preset time interval (gap), the network device generates the indication information, to indicate that the terminal device may directly transmit the uplink data on the channel resource without performing LBT.

It should be understood that if the first time interval is within the preset time interval (gap), it may be considered that a status of a channel is relatively stable. In other words, if a downlink-to-uplink switching time is less than the preset time interval, it may be considered that the status of the channel is relatively stable. That is, if the first time interval is within a short time (that is, the first time interval is less than or equal to the gap time), the channel may continue to be used to transmit the uplink data. Therefore, the network device generates the indication information, to indicate that the terminal device may directly send the uplink data on the channel resource.

Therefore, when the first time interval is less than or equal to the preset time interval, the network device generates the indication information, to instruct the terminal device to directly transmit the uplink data on the channel resource without performing LBT, so that a process of re-performing LBT during the transmission of the uplink data is avoided, thereby improving data transmission efficiency.

It should be understood that the preset time interval may be preset. For example, the preset time interval may be preset by a network system, or may be preconfigured. The preset time interval may alternatively be preset by the network device.

Optionally, a value range of the preset time interval is 10 µs to 100 µs.

For example, the preset time interval may be 16 µs, 25 µs, 50 µs, or the like.

Optionally, before generating the indication information, the network device further needs to determine that a sum of duration of the transmission of the downlink data on the channel resource and the first time interval is less than a maximum channel occupancy time in the LAA system.

It should be understood that the maximum channel occupancy time (The maximum Channel Occupancy Time) may also be described as a total time for which a communications device occupies a channel (the total time that an equipment make use of an Operating Channel).

It should be noted that, for the maximum channel occupancy time, different maximum channel occupancy times are allowed in different countries and regions. In addition, when different channel access modes are used, different maximum channel occupancy times are allowed. For example, as stipulated in the European Telecommunications Standards Institute (European Telecommunications Standards Institute, ETSI), the maximum channel occupancy duration in regulations is less than 10 m or is less than 13 ms. However, in Japan, as stipulated in related regulations, the maximum channel occupancy duration in the regulations needs to be less than 4 ms. The maximum channel occupancy time may be a maximum channel occupancy time as specified in an existing standard, or may be a maximum channel occupancy time satisfying maximum channel occupancy times corresponding to all countries or regions.

According to the present invention, as shown in FIG. 3, in the LAA system, the maximum channel occupancy time for which the network device preempts the channel resource is T, a time for which the network device transmits the downlink data on the channel resource is T1, the first time interval is T2, and the preset time interval is T3. According to the present invention, the network device generates an indication message only when T2<T3 and (T1+T2)<T, to instruct the terminal device to directly transmit the uplink data on the channel resource without performing LBT.

It should be understood that when the network device determines that the foregoing condition is not satisfied, that is, the first time interval is greater than or equal to the preset time interval, or the sum of the duration of the transmission of the downlink data on the channel resource and the first time interval is greater than or equal to the maximum channel occupancy time in the LAA system, the network device or the terminal device still needs to preempt, through LBT, a resource for transmitting the uplink data.

For example, when determining that the uplink-downlink time interval is greater than the preset time interval, the network device preempts, through LBT, the resource for transmitting the uplink data.

Alternatively, the network device sends, to the terminal device, information used to instruct the UE to preempt, through LBT, the resource for transmitting the uplink data.

The condition of generating the indication information is described above. Optionally, before generating the indication information, the network device sends RRC signaling to the terminal device, and the RRC signaling is used to configure the terminal device to directly send the uplink data without performing LBT.

In other words, the network device may first configure, for the terminal device by using the RRC signaling, a capability of directly sending the uplink data without performing LBT. Then, after the above-described condition (that is, T2<T3 and (T1+T2)<T) is satisfied, the indication information is generated to instruct the terminal device to directly transmit the uplink data on the channel resource.

For example, a system configures whether UE performs LBT. Assuming that the system sets a related parameter to 1, it indicates that the UE has a capability of directly sending uplink data without performing LBT, that is, when an uplink and a downlink satisfy a particular condition (for example, T2<T3 and (T1+T2)<T), the UE may directly send the uplink data without performing LBT; or if a related parameter is set to 0, it indicates that the UE cannot directly send uplink data without performing LBT in any case.

Specifically, the network device may configure a related parameter through semi-static configuration by using the RRC. If the parameter is set to 1, the UE may directly send the uplink data without performing LBT in a particular condition; or if the parameter is set to 0, the UE cannot directly send the uplink data without performing LBT in any condition.

For example, the network device preempts a channel to send the downlink data. If the system value is set to 1, when a base station detects that the uplink-downlink time interval (the first time interval) is less than a value of the preset time interval (gap), the base station instructs the UE to directly send the uplink data following the downlink data without preempting the channel by performing LBT. The sum of the downlink data and a value of the uplink-downlink time interval needs to be less than or equal to the maximum channel occupancy time. If discovering that the uplink-downlink time interval is greater than the value of the gap, the base station notifies the UE that the UE cannot directly send the uplink data after the transmission of the downlink data ends and the UE still needs to perform an LBT operation.

It should be understood that configuring, by using the RRC signaling, a capability of directly sending the uplink data without performing LBT for the terminal device is an optional step. In this case the configuration may not be sent. A system may consider, by default, that the terminal device has the capability, that is, the terminal device has the capability of directly sending the uplink data without performing LBT. After receiving the indication information, the terminal device may directly transfer the uplink data.

220: Send the indication information.

Specifically, the network device sends the indication information to the terminal device, to instruct the terminal device to directly transmit the uplink data on the channel resource without performing LBT.

For example, the network device sends the indication information to the terminal device by using a downlink control channel PDCCH.

Specifically, the network device may add one bit to downlink control information (Downlink Control Information, DCI) of the PDCCH. A value of the bit may be 0 or 1. If the first time interval is less than or equal to a value of the gap, a base station sets the value of the bit to 1, indicating that the UE may directly transmit the uplink data following the downlink data without performing LBT. If the base station discovers that the first time interval does not satisfy the foregoing condition, the value of the bit is 0, indicating that the UE needs to perform LBT.

For another example, the network device sends the indication information by using a preset resource in the channel resource.

For example, the preset resource is a PHICH resource in the channel resource.

It should be understood that, for a conventional LTE system, a synchronous hybrid automatic repeat (Hybrid Automatic Repeat reQuest, HARQ) mode is used in an uplink of the conventional LTE system. However, for the LAA system, because the UE in LAA-LTE cannot always occupy the channel, HARQ retransmission is interrupted due to discontinuous transmission, and the network device retransmits a data packet only after the UE re-preempts the channel. A waiting time may be very long, causing a data delay. As a result, in the LAA system, an asynchronous HARQ operation is used in the uplink, and no PHICH is required, so that the PHICH resource is idle. Therefore, the PHICH channel resource may be used to notify the UE whether to perform an LBT operation.

Specifically, the network device preempts an unlicensed carrier, and sends the downlink data after successfully preempting the unlicensed carrier. The base station detects whether the first time interval is less than or equal to the value of the gap. If the first time interval is less than or equal to the value of the gap, the network device schedules the uplink data and notifies the UE by using the PHICH that the UE may directly send the uplink data following the downlink data without performing the LBT operation.

For example, the network device may add one bit to the PHICH. A value of the bit may be 0 or 1. If the first time interval is less than or equal to the value of the gap, the base station sets the value of the bit to 1, indicating that the UE may directly transmit the uplink data following the downlink data without performing LBT. If the base station discovers that the first time interval does not satisfy the foregoing condition, the value of the bit is 0, indicating that the UE needs to perform LBT.

230: The terminal device transmits uplink data.

Specifically, after receiving the indication information, the terminal device directly transmits the uplink data on the channel resource without performing LBT, as indicated by the indication information.

Therefore, when determining that the first time interval is less than or equal to the preset time interval, the network device generates the indication information, and sends the indication information to the terminal device, so that the terminal device directly transmits the uplink data on the channel resource without performing LBT, as indicated by the indication information. Therefore, the terminal device may directly send the uplink data on the channel resource without performing LBT, so that the process of re-performing LBT during the transmission of the uplink data is avoided, thereby improving the data transmission efficiency.

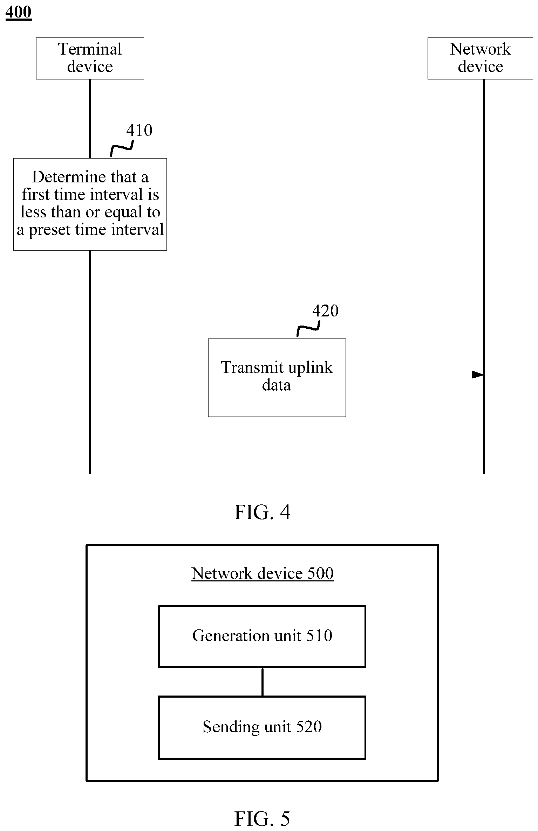

The data transmissions method is described above in detail with reference to FIG. 2 and FIG. 3. Another data transmission method is described below with reference to the FIG. 4.

It should be understood that a difference between FIG. 4 and FIG. 2 lies that: in FIG. 2, the network device generates the indication information and sends the indication information to the terminal device, to instruct the terminal device to directly send the uplink data on the channel resource without performing LBT, after determining that the first time interval is less than or equal to the preset time interval; and in FIG. 4, the terminal device determines whether the first time interval is less than or equal to the preset time interval, and directly sends the uplink data on the channel resource when determining that the first time interval is less than or equal to the preset time interval. In other words, in the method in FIG. 4, the terminal device determines whether to send the uplink data on the channel resource and does not need to be indicated by the network device. The data transmission method is described below in detail with reference to FIG. 4.

FIG. 4 is a schematic flowchart of a data transmission method. The method shown in FIG. 4 may be applied to the communications system in FIG. 1. The method 400 shown in FIG. 4 includes the following steps.

410: A terminal device determines that a first time interval is less than or equal to a preset time interval.

The first time interval is a time interval between a moment at which transmission of downlink data on a channel resource ends and a moment at which the terminal device starts transmission of uplink data. The channel resource is an unlicensed spectrum resource preempted by a network device through listen before talk LBT.

Specifically, the network device first preempts the unlicensed spectrum resource, namely, the channel resource, through LBT, and then transmits the downlink data to the terminal device by using the channel resource. Then, the network device sends an uplink scheduling grant (UL grant) message to the terminal device, to schedule the uplink data. Then, the terminal device first determines whether the first time interval is less than or equal to the preset time interval. If the first time interval is less than or equal to the preset time interval, the terminal device may directly transmit the uplink data on the channel resource without performing LBT.

It should be understood that if the first time interval is within the preset time interval (gap), it may be considered that a status of a channel is relatively stable. In other words, if a downlink-to-uplink switching time is less than the preset time interval, it may be considered that the status of the channel is relatively stable. That is, if the first time interval is within a short time (that is, the first time interval is less than or equal to the gap time), the channel may continue to be used to transmit the uplink data. Therefore, it may be determined that the first time interval is less than or equal to the preset time interval. The terminal device may directly send the uplink data on the channel resource.

It should be understood that the preset time interval may be preset. For example, the preset time interval may be preset by a network system, or may be preconfigured. The preset time interval may alternatively be preconfigured by the network device for the terminal device by using signaling. The preset time interval may alternatively be preset by the terminal device.

Optionally, a value range of the preset time interval is 10 µs to 100 µs.

For example, the preset time interval may be 16 µs, 25 µs, 50 µs, or the like.

Optionally, the terminal device may further determine that a sum of duration of the transmission of the downlink data on the channel resource and the first time interval is less than a maximum channel occupancy time in an LAA system.

It should be understood that the maximum channel occupancy time (The maximum Channel Occupancy Time) may also be described as a total time for which a communications device occupies a channel (the total time that an equipment make use of an Operating Channel).

It should be noted that, for the maximum channel occupancy time, different maximum channel occupancy times are allowed in different countries and regions. In addition, when different channel access modes are used, different maximum channel occupancy times are allowed. For example, as stipulated in the European Telecommunications Standards Institute (European Telecommunications Standards Institute, ETSI), the maximum channel occupancy duration in regulations is less than 10 m or is less than 13 ms. However, in Japan, as stipulated in related regulations, the maximum channel occupancy duration in the regulations needs to be less than 4 ms. The maximum channel occupancy time may be a maximum channel occupancy time as specified in an existing standard, or may be a maximum channel occupancy time satisfying maximum channel occupancy times corresponding to all countries or regions.

For example, as shown in FIG. 3, in the LAA system, the maximum channel occupancy time for which the network device preempts the channel resource is T, a time for which the network device transmits the downlink data on the channel resource is T1, the first time interval is T2, and the preset time interval is T3. The terminal device may directly transmit the uplink data on the channel resource only when T2<T3 and (T1+T2)<T.

It should be understood that when the terminal device determines that the foregoing condition is not satisfied, that is, the first time interval is greater than or equal to the preset time interval, or the sum of the duration of the transmission of the downlink data on the channel resource and the first time interval is greater than or equal to the maximum channel occupancy time in the LAA system, the network device or the terminal device still needs to preempt, through LBT, a resource for transmitting the uplink data.

For example, when determining that the uplink-downlink time interval is greater than the preset time interval, the terminal device preempts, through LBT, the resource for transmitting the uplink data.

420: The terminal device transmits uplink data.

Specifically, after the condition in 410 is satisfied, the terminal device directly transmits the uplink data on the channel resource without performing LBT.

Specifically, the network device first preempts the unlicensed spectrum resource, namely, the channel resource, through LBT, and then transmits the downlink data to the terminal device by using the channel resource. Then, the network device sends an uplink scheduling grant (UL grant) message to the terminal device, to schedule the uplink data. Then, the terminal device first determines whether the first time interval is less than or equal to the preset time interval. If the first time interval is less than or equal to the preset time interval, the terminal device directly transmits the uplink data on the channel resource without performing LBT.

Optionally, the terminal device further needs to determine that the sum of the duration of the transmission of the downlink data on the channel resource and the first time interval is less than the maximum channel occupancy time in the LAA system. Then, the terminal device directly sends the uplink data on the channel resource.

Thereforeafter determining that the first time interval is less than or equal to the preset time interval, the terminal device directly transmits the uplink data on the channel resource without performing LBT. The terminal device may directly send the uplink data on the channel resource without performing LBT, so that a process of re-performing LBT during the transmission of the uplink data is avoided, thereby improving data transmission efficiency.

The data transmission methods are described above in detail with reference to FIG. 2 to FIG. 4. Data transmission devices are described below with reference to FIG. 5 to FIG. 10.

FIG. 5 is a schematic block diagram of a network device 500 for data transmission. As shown in FIG. 5, the network device 500 includes:
a generation unit 510, configured to generate indication information, where the indication information is used to instruct a terminal device to directly transmit uplink data on a channel resource without performing LBT, the channel resource is an unlicensed spectrum resource preempted by the network device through listen before talk LBT, and a first time interval between a moment at which transmission of downlink data on the channel resource ends and a moment at which the terminal device is scheduled to start the transmission of the uplink data is less than or equal to a preset time interval; and
a sending unit 520, configured to send the indication information to the terminal device.

Therefore, when determining that the first time interval is less than or equal to the preset time interval, the network device generates the indication information, and sends the indication information to the terminal device, so that the terminal device directly transmits the uplink data on the channel resource without performing LBT, as indicated by the indication information. Therefore, the terminal device may directly send the uplink data on the channel resource without performing LBT, so that a process of re-performing LBT during the transmission of the uplink data is avoided, thereby improving data transmission efficiency.

Optionally, a sum of duration of the transmission of the downlink data on the channel resource and the first time interval is less than a maximum channel occupancy time in an LAA system.

Optionally, the sending unit 520 is specifically configured to send the indication information to the terminal device by using a downlink control channel PDCCH.

Optionally, the sending unit 520 is specifically configured to send the indication information by using a preset resource in the channel resource.

Optionally, the preset resource is a PHICH resource in the channel resource.

Optionally, the sending unit 520 is further configured to: before the generation unit generates the indication information, send RRC signaling to the terminal device. The RRC signaling is used to configure the terminal device to be capable of directly sending the uplink data without performing LBT.

Optionally, a value range of the preset time interval is 10 µs to 100 µs.

It should be understood that the network device 500 shown in FIG. 5 can implement all the processes of the network device in FIG. 2. Operations and/or functions of all the modules in the network device 500 are respectively for implementing corresponding procedures in the method in FIG. 2. For details, refer to the descriptions of the foregoing method. To avoid repetition, detailed descriptions are properly omitted herein.

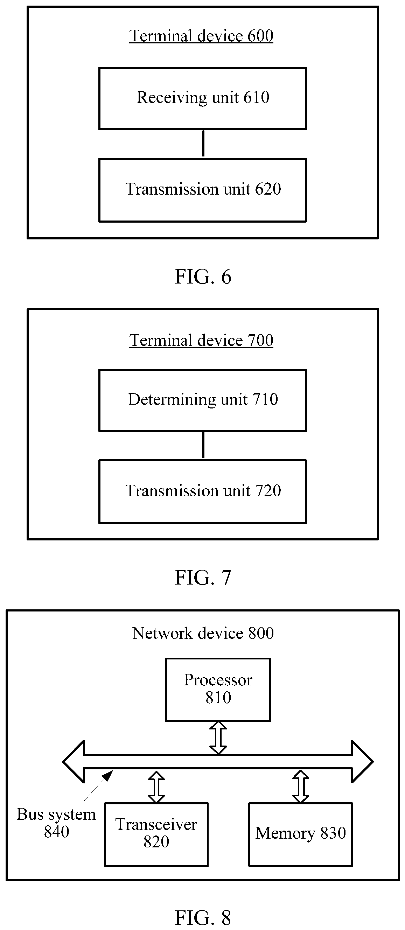

FIG. 6 is a schematic block diagram of a terminal device 600 for data transmission. As shown in FIG. 6, the terminal device 600 includes:
a receiving unit 610, configured to receive indication information sent by a network device, where the indication information is used to instruct the terminal device to directly transmit uplink data on a channel resource without performing LBT, and the channel resource is an unlicensed spectrum resource preempted by the network device through listen before talk LBT; and
a transmission unit 620, configured to directly transmit, based on the indication information, the uplink data on the channel resource without performing LBT.

Thereforewhen determining that the first time interval is less than or equal to the preset time interval, the network device generates the indication information, and sends the indication information to the terminal device, so that the terminal device directly transmits the uplink data on the channel resource without performing LBT, as indicated by the indication information. Therefore, the terminal device may directly send the uplink data on the channel resource without performing LBT, so that a process of re-performing LBT during the transmission of the uplink data is avoided, thereby improving data transmission efficiency.

Optionally, a sum of duration of transmission of downlink data on the channel resource and the first time interval is less than a maximum channel occupancy time in the LAA system, and the first time interval is a time interval between a moment at which the transmission of the downlink data on the channel resource ends and a moment at which the terminal device starts the transmission of the uplink data.

Optionally, the receiving unit 610 is specifically configured to receive the indication information sent by the network device by using a downlink control channel PDCCH.

Optionally, the receiving unit 610 is specifically configured to receive the indication information sent by the network device by using a preset resource in the channel resource.

Optionally, the preset resource is a PHICH resource in the channel resource.

Optionally, the receiving unit 610 is further configured to: before receiving the indication information sent by the network device, receive RRC signaling sent by the network device. The RRC signaling is used to configure the terminal device to direct send the uplink data without performing LBT.

Optionally, a value range of the preset time interval is 10 µs to 100 µs.

It should be understood that the terminal device 600 shown in FIG. 6 can implement all processes of the terminal device in FIG. 2. Operations and/or functions of all the modules in the terminal device 600 are respectively for implementing corresponding procedures in the method in FIG. 2. For details, refer to the descriptions of the foregoing method. To avoid repetition, detailed descriptions are properly omitted herein.

FIG. 7 is a schematic block diagram of a terminal device 700 for data transmission. As shown in FIG. 7, the terminal device 700 includes:
a determining unit 710, configured to determine that a first time interval is less than or equal to a preset time interval, where the first time interval is a time interval between a moment at which transmission of downlink data on a channel resource ends and a moment at which the terminal device starts transmission of uplink data, and the channel resource is an unlicensed spectrum resource preempted by a network device through listen before talk LBT; and
a transmission unit 720, configured to directly transmit the uplink data on the channel resource without performing LBT.

Optionally, a sum of duration of the transmission of the downlink data on the channel resource and the first time interval is less than a maximum channel occupancy time in an LAA system.

Therefore, after determining that the first time interval is less than or equal to the preset time interval, the terminal device directly transmits the uplink data on the channel resource without performing LBT. the terminal device may directly send the uplink data on the channel resource without performing LBT, so that a process of re-performing LBT during the transmission of the uplink data is avoided, thereby improving data transmission efficiency.

It should be understood that the terminal device 700 shown in FIG. 7 can implement all processes of the terminal device in FIG. 4. Operations and/or functions of all the modules in the terminal device 700 are respectively for implementing corresponding procedures in the method in FIG. 4. For details, refer to the descriptions of the foregoing method. To avoid repetition, detailed descriptions are properly omitted herein.

FIG. 8 is a schematic block diagram of a network device 800. As shown in FIG. 8, the network device 800 includes a processor 810 and a transceiver 820. The processor 810 is connected to the transceiver 820. Optionally, the network device 800 further includes a memory 830. The memory 830 is connected to the processor 810. Further and optionally, the apparatus 800 includes a bus system 840. The processor 810, the memory 830, and the transceiver 820 may be connected by using the bus system 840. The memory 830 may be configured to store an instruction. The processor 810 is configured to execute the instruction stored in the memory 830, to control the transceiver 820 to send information or a signal.

The processor 810 is configured to generate indication information. The indication information is used to instruct a terminal device to directly transmit uplink data on a channel resource without performing LBT, the channel resource is an unlicensed spectrum resource preempted by the network device through listen before talk LBT, and a first time interval between a moment at which transmission of downlink data on the channel resource ends and a moment at which the terminal device is scheduled to start the transmission of the uplink data is less than or equal to a preset time interval.

The transceiver 820 is configured to send the indication information to the terminal device.

Therefore, when determining that the first time interval is less than or equal to the preset time interval, the network device generates the indication information, and sends the indication information to the terminal device, so that the terminal device directly transmits the uplink data on the channel resource without performing LBT, as indicated by the indication information. Therefore, the terminal device may directly send the uplink data on the channel resource without performing LBT, so that a process of re-performing LBT during the transmission of the uplink data is avoided, thereby improving data transmission efficiency.

It should be understood that the processor 810 may be a central processing unit (Central Processing Unit, "CPU" for short), or the processor 810 may be another general purpose processor, a digital signal processor (DSP), an application-specific integrated circuit (ASIC), a field programmable gate array (FPGA) or another programmable logic device, a discrete gate or a transistor logic device, a discrete hardware component, or the like. The general purpose processor may be a microprocessor, or the processor may be any conventional processor, or the like.

The memory 830 may include a read-only memory and a random access memory, and provide an instruction and data to the processor 810. A part of the memory 830 may further include a non-volatile random access memory. For example, the memory 830 may further store information about a device type.

In addition to a data bus, the bus system 840 may further include a power bus, a control bus, a status signal bus, and the like. However, for clear description, various types of buses in the figure are marked as the bus system 840.

In an implementation process, the steps in the foregoing method may be implemented by using an integrated logical circuit of hardware in the processor 810 or an instruction in a form of software. The steps of the method may be directly performed by a hardware processor, or may be performed by using a combination of the hardware in the processor and a software module. The software module may be located in a mature storage medium such as a random access memory, a flash memory, a read-only memory, a programmable read-only memory, an electrically erasable programmable memory, or a register in the art. The storage medium is located in the memory 830, and the processor 810 reads information in the memory 830 and completes the steps in the foregoing method in combination with the hardware of the processor. To avoid repetition, details are not described herein again.

Optionally, a sum of duration of the transmission of the downlink data on the channel resource and the first time interval is less than a maximum channel occupancy time in the LAA system.

Optionally, the transceiver 820 is specifically configured to send the indication information to the terminal device by using a downlink control channel PDCCH.

Optionally, the transceiver 820 is specifically configured to send the indication information by using a preset resource in the channel resource.

Optionally, the preset resource is a PHICH resource in the channel resource.

Optionally, the transceiver 820 is further configured to: before the processor generates the indication information, send RRC signaling to the terminal device. The RRC signaling is used to configure the terminal device to be capable of directly sending the uplink data without performing LBT.

Optionally, a value range of the preset time interval is 10 µs to 100 µs.

It should be understood that the network device 800 shown in FIG. 8 can implement all processes of the network device in FIG. 2. Operations and/or functions of all the modules in the network device 800 are respectively for implementing corresponding procedures in the method in FIG. 2. For details, refer to the descriptions of the foregoing method. To avoid repetition, detailed descriptions are properly omitted herein.

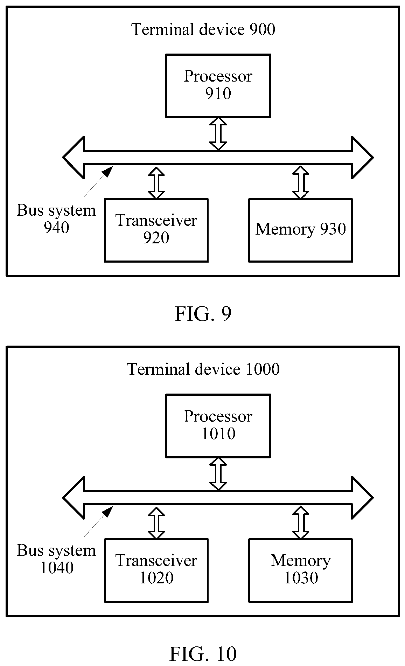

FIG. 9 is a schematic block diagram of a terminal device 900 according. As shown in FIG. 9, the terminal device 900 includes a processor 910 and a transceiver 920. The processor 910 is connected to the transceiver 920. Optionally, the terminal device 900 further includes a memory 930. The memory 930 is connected to the processor 910. Further and optionally, the terminal device 900 includes a bus system 940. The processor 910, the memory 930, and the transceiver 920 may be connected by using the bus system 940. The memory 930 may be configured to store an instruction. The processor 910 is configured to execute the instruction stored in the memory 930, to control the transceiver 920 to send information or a signal.

The processor 910 is configured to execute the instruction stored in the memory 930, to control the transceiver 920 to: receive indication information sent by a network device, where the indication information is used to instruct the terminal device to directly transmit uplink data on a channel resource without performing LBT, and the channel resource is an unlicensed spectrum resource preempted by the network device through listen before talk LBT; and to directly transmit, based on the indication information, the uplink data on the channel resource without performing LBT.

Therefore, when determining that a first time interval is less than or equal to a preset time interval, the network device generates the indication information, and sends the indication information to the terminal device, so that the terminal device directly transmits the uplink data on the channel resource without performing LBT, as indicated by the indication information. Therefore, the terminal device may directly send the uplink data on the channel resource without performing LBT, so that a process of re-performing LBT during the transmission of the uplink data is avoided, thereby improving data transmission efficiency.

It should be understood that the processor 910 may be a central processing unit (Central Processing Unit, "CPU" for short), or the processor 910 may be another general purpose processor, a digital signal processor (DSP), an application-specific integrated circuit (ASIC), a field programmable gate array (FPGA) or another programmable logic device, a discrete gate or a transistor logic device, a discrete hardware component, or the like. The general purpose processor may be a microprocessor, or the processor may be any conventional processor, or the like.

The memory 930 may include a read-only memory and a random access memory, and provide an instruction and data to the processor 910. A part of the memory 930 may further include a non-volatile random access memory. For example, the memory 930 may further store information about a device type.

In addition to a data bus, the bus system 940 may further include a power bus, a control bus, a status signal bus, and the like. However, for clear description, various types of buses in the figure are marked as the bus system 940.

In an implementation process, the steps in the foregoing method may be implemented by using an integrated logical circuit of hardware in the processor 910 or an instruction in a form of software. The steps of the method disclosed may be directly performed by a hardware processor, or may be performed by using a combination of the hardware in the processor and a software module. The software module may be located in a mature storage medium such as a random access memory, a flash memory, a read-only memory, a programmable read-only memory, an electrically erasable programmable memory, or a register in the art. The storage medium is located in the memory 930, and the processor 910 reads information in the memory 930 and completes the steps in the foregoing method in combination with the hardware of the processor. To avoid repetition, details are not described herein again.

Optionally, a sum of duration of transmission of downlink data on the channel resource and the first time interval is less than a maximum channel occupancy time in the LAA system, and the first time interval is a time interval between a moment at which the transmission of the downlink data on the channel resource ends and a moment at which the terminal device starts the transmission of the uplink data.

Optionally, the transceiver 920 is specifically configured to receive the indication information sent by the network device by using a downlink control channel PDCCH.

Optionally, the transceiver 920 is specifically configured to receive the indication information sent by the network device by using a preset resource in the channel resource.

Optionally, the preset resource is a PHICH resource in the channel resource.

Optionally, the transceiver 920 is further configured to: before receiving the indication information sent by the network device, receive RRC signaling sent by the network device. The RRC signaling is used to configure the terminal device to direct send the uplink data without performing LBT.

Optionally, a value range of the preset time interval is 10 µs to 100 µs.

It should be understood that the terminal device 900 shown in FIG. 9 can implement all processes of the terminal device in FIG. 2. Operations and/or functions of all the modules in the terminal device 900 are respectively for implementing corresponding procedures in the method in FIG. 2. For details, refer to the descriptions of the foregoing method. To avoid repetition, detailed descriptions are properly omitted herein.

FIG. 10 is a schematic block diagram of a terminal device 1000 for data transmission. As shown in FIG. 10, the terminal device 1000 includes:
a processor 1010 and a transceiver 1020. The processor 1010 is connected to the transceiver 1020. Optionally, the network device 1000 further includes a memory 1030. The memory 1030 is connected to the processor 1010. Further and optionally, the apparatus 1000 includes a bus system 1040. The processor 1010, the memory 1030, and the transceiver 1020 may be connected by using the bus system 1040. The memory 1030 may be configured to store an instruction. The processor 1010 is configured to execute the instruction stored in the memory 1030, to control the transceiver 1020 to send information or a signal.

The processor 1010 is configured to execute the instruction stored in the memory 1030, to determine that a first time interval is less than or equal to a preset time interval, where the first time interval is a time interval between a moment at which transmission of downlink data on a channel resource ends and a moment at which the terminal device starts transmission of uplink data, and the channel resource is an unlicensed spectrum resource preempted by a network device through listen before talk LBT.

The transceiver 1020 is configured to directly transmit the uplink data on the channel resource without performing LBT.

Therefore, after determining that the first time interval is less than or equal to the preset time interval, the terminal device directly transmits the uplink data on the channel resource without performing LBT. the terminal device may directly send the uplink data on the channel resource without performing LBT, so that a process of re-performing LBT during the transmission of the uplink data is avoided, thereby improving data transmission efficiency.

It should be understood that the processor 1010 may be a central processing unit (Central Processing Unit, "CPU" for short), or the processor 1010 may be another general purpose processor, a digital signal processor (DSP), an application-specific integrated circuit (ASIC), a field programmable gate array (FPGA) or another programmable logic device, a discrete gate or a transistor logic device, a discrete hardware component, or the like. The general purpose processor may be a microprocessor, or the processor may be any conventional processor, or the like.

The memory 1030 may include a read-only memory and a random access memory, and provide an instruction and data to the processor 1010. A part of the memory 1030 may further include a non-volatile random access memory. For example, the memory 1030 may further store information about a device type.

In addition to a data bus, the bus system 1040 may further include a power bus, a control bus, a status signal bus, and the like. However, for clear description, various types of buses in the figure are marked as the bus system 1040.

In an implementation process, the steps in the foregoing method may be implemented by using an integrated logical circuit of hardware in the processor 1010, or an instruction in a form of software. The steps of the method disclosed may be directly performed by a hardware processor, or may be performed by using a combination of the hardware in the processor and a software module. The software module may be located in a mature storage medium such as a random access memory, a flash memory, a read-only memory, a programmable read-only memory, an electrically erasable programmable memory, or a register in the art. The storage medium is located in the memory 1030, and the processor 1010 reads information in the memory 1030 and completes the steps in the foregoing method in combination with the hardware of the processor. To avoid repetition, details are not described herein again.

Optionally, a sum of duration of the transmission of the downlink data on the channel resource and the first time interval is less than a maximum channel occupancy time in the LAA system.

It should be understood that the terminal device 1000 shown in FIG. 10 can implement all processes of the terminal device in FIG. 4. Operations and/or functions of all the modules in the terminal device 1000 are respectively for implementing corresponding procedures in the method in FIG. 4. For details, refer to the descriptions of the foregoing method. To avoid repetition, detailed descriptions are properly omitted herein.

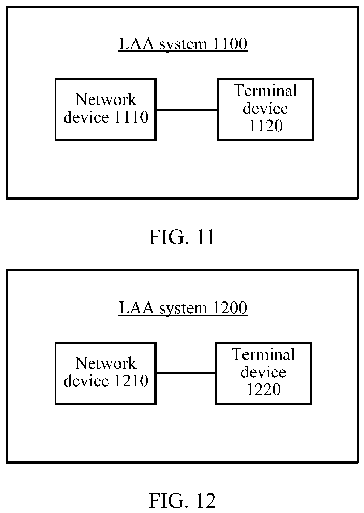

FIG. 11 is a schematic block diagram of an LAA system 1100. As shown in FIG. 11, the LAA system 1100 includes:
a network device 1110 and a terminal device 1120.

The network device 1110 can implement all processes of the network device in FIG. 2. For details, refer to the descriptions of the foregoing method. To avoid repetition, detailed descriptions are properly omitted herein. The terminal device 1120 can implement all processes of the terminal device in FIG. 2. For details, refer to the descriptions of the foregoing method. To avoid repetition, detailed descriptions are properly omitted herein.

Thereforewhen determining that a first time interval is less than or equal to a preset time interval, the network device generates indication information, and sends the indication information to the terminal device, so that the terminal device directly transmits uplink data on the channel resource without performing LBT, as indicated by the indication information. Thereforethe terminal device may directly send the uplink data on the channel resource without performing LBT, so that a process of re-performing LBT during the transmission of the uplink data is avoided, thereby improving data transmission efficiency.

FIG. 12 is a schematic block diagram of an LAA system 1200. As shown in FIG. 12, the LAA system 1200 includes:
a network device 1210 and a terminal device 1220.

The terminal device 1220 can implement all processes of the terminal device in FIG. 4. For details, refer to the descriptions of the foregoing method. To avoid repetition, detailed descriptions are properly omitted herein. The network device 1210 may be the same as an existing network device.

Therefore, after determining that a first time interval is less than or equal to a preset time interval, the terminal device directly transmits uplink data on the channel resource without performing LBT. the terminal device may directly send the uplink data on the channel resource without performing LBT, so that a process of re-performing LBT during the transmission of the uplink data is avoided, thereby improving data transmission efficiency.

It should be understood that "an embodiment" mentioned in the whole specification means that particular features, structures, or characteristics related to the embodiments are included in at least one embodiment of the present invention. Therefore, "in an embodiment" appearing throughout the whole specification does not refer to a same embodiment. In addition, these particular features, structures, or characteristics may be combined in one or more embodiments in any appropriate manner. It should be understood that sequence numbers of the foregoing processes do not mean execution sequences in the embodiments of the present invention. The execution sequences of the processes should be determined based on functions and internal logic of the processes, and should not be construed as any limitation on the implementation processes of the embodiments of the present invention.

In addition, the terms "system" and "network" may be interchangeably used in this specification. The term "and/or" in this specification describes only an association relationship for describing associated objects and represents that three relationships may exist. For example, A and/or B may represent the following three cases: Only A exists, both A and B exist, and only B exists. In addition, the character "/" in this specification usually indicates an "or" relationship between the associated objects.

It should be understood that in the embodiments of the present invention, "B corresponding to A" indicates that B is associated with A, and B may be determined based on A. However, it should be further understood that determining A based on B does not mean that B is determined based on only A, that is, B may also be determined based on A and/or other information.

A person of ordinary skill in the art may be aware that, in combination with examples of units and algorithm steps described according to the embodiments disclosed in this specification, the present invention can be implemented by using electronic hardware, computer software, or a combination thereof. To clearly describe the interchangeability between the hardware and the software, compositions and steps of each example have been generally described in the foregoing descriptions based on functions. Whether the functions are performed by using hardware or software depends on particular applications and design constraint conditions of the technical solutions. A person skilled in the art may use different methods to implement the described functions for each particular application, but it should not be considered that the implementation goes beyond the scope of the present invention.

A person skilled in the art may clearly understand that, for the purpose of convenient and brief description, for a detailed working process of the foregoing described system, apparatus, and unit, refer to a corresponding process in the foregoing method embodiments, and details are not described herein again.

In the several embodiments provided in this application, it should be understood that the disclosed system, apparatus, and method may be implemented in other manners. For example, the foregoing described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces, indirect couplings or communication connections between the apparatuses or units, or electrical connections, mechanical connections, or connections in other forms.

The units described as separate parts may or may not be physically separate, and parts displayed as units may or may not be physical units, may be located in one position, or may be distributed on a plurality of network units. Some or all of the units may be selected based on actual requirements to achieve the objective of the solutions of the embodiments of the present invention.

In addition, functional units in the embodiments of the present invention may be integrated into one processing unit, or each of the units may exist alone physically, or two or more units may be integrated into one unit. The integrated unit may be implemented in a form of hardware, or may be implemented in a form of a software functional unit.

Based on the foregoing descriptions of the implementations, a person skilled in the art may clearly understand that the present invention may be implemented by using hardware, firmware, or a combination thereof. When the present invention is implemented by using software, the foregoing functions may be stored in a computer readable medium or transmitted as one or more instructions or code in the computer readable medium. The computer readable medium includes a computer storage medium and a communications medium. The communications medium includes any medium that enables a computer program to be transmitted from one place to another place. The storage medium may be any available medium accessible to a computer. The following provides an example but does not impose a limitation: The computer readable medium may include a RAM, a ROM, an EEPROM, a CD-ROM or another optical disc storage, a disk storage medium or another magnetic storage device, or any other medium that can carry or store expected program code in a form of an instruction or a data structure and that can be accessed by a computer. In addition, any connection may be appropriately defined as a computer readable medium. For example, if software is transmitted from a website, a server, or another remote source by using a coaxial cable, an optical fiber/cable, a twisted pair, a digital subscriber line (DSL) or wireless technologies such as infrared ray, radio and microwave, the coaxial cable, optical fiber/cable, twisted pair, DSL or wireless technologies such as infrared ray, radio and microwave are included in fixation of a medium to which they belong. For example, a disk (Disk) and disc (disc) used in the present invention includes a compact disc CD, a laser disc, an optical disc, a digital versatile disc (DVD), a floppy disk and a Blu-ray disc. The disk generally copies data by using a magnetic means, and the disc copies data optically by using a laser means. The foregoing combination should also be included in the protection scope of the computer readable medium.

## Claims

1. A data transmission method, applied to a licensed-assisted access LAA system, wherein the method comprises:
generating (210), by a network device, indication information, wherein the indication information is used to instruct a terminal device to directly transmit uplink data on a channel resource without performing LBT, the channel resource is an unlicensed spectrum resource preempted by the network device through listen before talk LBT, and a first time interval between a moment at which transmission of downlink data on the channel resource ends and a moment at which the terminal device is scheduled to start the transmission of the uplink data is less than or equal to a preset time interval;
sending (220), by the network device, the indication information to the terminal device; and
**characterized in that**:
the maximum channel occupancy time is T, a time for which the network device transmits the downlink data on the channel resource is T1, the first time interval is T2, and the preset time interval is T3, such that a sum of duration of the transmission of the downlink data on the channel resource and the first time interval is less than the maximum channel occupancy time in the LAA system; and
the network device generates the indication message only when T2<T3 and (T1+T2)<T.

2. The method according to claim 1, wherein the sending, by the network device, the indication information to the terminal device comprises:
sending, by the network device, the indication information to the terminal device by using a downlink control channel PDCCH.

3. The method according to claim 1, wherein the sending, by the network device, the indication information to the terminal device comprises:
sending, by the network device, the indication information by using a preset resource in the channel resource.

4. The method according to claim 3, wherein
the preset resource is a physical hybrid automatic repeat indicator channel PHICH resource in the channel resource.

5. The method according to any one of claims 1 to 4, wherein before the generating, by a network device, indication information, the method further comprises:
sending, by the network device, Radio Resource Control RRC signaling to the terminal device, wherein the RRC signaling is used to configure the terminal device to be capable of directly sending the uplink data without performing LBT.

6. The method according to any one of claims 1 to 5, wherein
a value range of the preset time interval is 10 µs to 100 µs.

7. A data transmission method, applied to a licensed-assisted access LAA system, wherein the method comprises:
receiving, by a terminal device, indication information sent by a network device, wherein the indication information is used to instruct the terminal device to directly transmit uplink data on a channel resource without performing LBT, and the channel resource is an unlicensed spectrum resource preempted by the network device through listen before talk LBT, and a first time interval between a moment at which transmission of downlink data on the channel resource ends and a moment at which the terminal device is scheduled to start the transmission of the uplink data is less than or equal to a preset time interval;
directly transmitting, by the terminal device based on the indication information, the uplink data on the channel resource without performing LBT ;
**characterized in that**:
the maximum channel occupancy time is T, a time for which the network device transmits the downlink data on the channel resource is T1, the first time interval is T2, and the preset time interval is T3, such that a sum of duration of transmission of downlink data on the channel resource and the first time interval is less than the maximum channel occupancy time in the LAA system; and
the network device generates the indication message only when T2<T3 and (T1+T2)<T.

8. The method according to claim 7, wherein the receiving, by a terminal device, indication information sent by a network device comprises:
receiving, by the terminal device, the indication information sent by the network device by using a downlink control channel PDCCH.

9. The method according to claim 7, wherein the receiving, by a terminal device, indication information sent by a network device comprises:
receiving, by the terminal device, the indication information sent by the network device by using a preset resource in the channel resource.

10. The method according to claim 9, wherein
the preset resource is a physical hybrid automatic repeat indicator channel PHICH resource in the channel resource.

11. The method according to any one of claims 7 to 10, wherein before the receiving, by a terminal device, indication information sent by a network device, the method further comprises:
receiving, by the terminal device, Radio Resource Control RRC signaling sent by the network device, wherein the RRC signaling is used to configure the terminal device to direct send the uplink data without performing LBT.

12. The method according to any one of claims 7 to 11, wherein
a value range of the preset time interval is 10 µs to 100 µs.

## Patentansprüche

1. Datenübertragungsverfahren, angewandt auf ein System mit "Licensed-Assisted Access", LAA, wobei das Verfahren umfasst:
Erzeugen (210), durch eine Netzwerkvorrichtung, von Anzeigeinformationen, wobei die Anzeigeinformationen dazu verwendet werden, ein Endgerät anzuweisen, Uplink-Daten auf einer Kanalressource direkt zu senden, ohne LBT durchzuführen, wobei die Kanalressource eine nicht-lizenzierte Spektrumsressource ist, die durch die Netzwerkvorrichtung durch "Listen before Talk", LBT, vorbelegt ist, und ein erstes Zeitintervall zwischen einem Zeitpunkt, zu dem die Übertragung von Downlink-Daten auf der Kanalressource endet, und einem Zeitpunkt, zu dem für das Endgerät geplant ist, die Übertragung der Uplink-Daten zu beginnen, kleiner als oder gleich einem voreingestellten Zeitintervall ist;
Senden (220), durch die Netzwerkvorrichtung, der Anzeigeinformationen an das Endgerät; und
**dadurch gekennzeichnet, dass**:
die maximale Kanalbelegungszeit T ist, eine Zeit, für die die Netzwerkvorrichtung die Downlink-Daten auf der Kanalressource überträgt, T1 ist, das erste Zeitintervall T2 ist und das voreingestellte Zeitintervall T3 ist, derart, dass eine Summe der Dauer der Übertragung der Downlink-Daten auf der Kanalressource und des ersten Zeitintervalls kleiner als die maximale Kanalbelegungszeit im LAA-System ist; und
die Netzwerkvorrichtung die Anzeigenachricht nur erzeugt, wenn T2<T3 und (T1+T2)<T.

2. Verfahren nach Anspruch 1, wobei das Senden, durch die Netzwerkvorrichtung, der Anzeigeinformationen an das Endgerät umfasst:
Senden, durch die Netzwerkvorrichtung, der Anzeigeinformationen an das Endgerät unter Verwendung eines "Downlink Control Channel", PDCCH.

3. Verfahren nach Anspruch 1, wobei das Senden, durch die Netzwerkvorrichtung, der Anzeigeinformationen an das Endgerät umfasst:
Senden, durch die Netzwerkvorrichtung, der Anzeigeinformationen unter Verwendung einer voreingestellten Ressource in der Kanalressource.

4. Verfahren nach Anspruch 3, wobei
die voreingestellte Ressource eine "Physical Hybrid Automatic Repeat Indicator Channel"-, PHICH-, Ressource in der Kanalressource ist.

5. Verfahren nach einem der Ansprüche 1 bis 4, wobei das Verfahren vor dem Erzeugen, durch eine Netzwerkvorrichtung, von Anzeigeinformationen ferner umfasst:
Senden, durch die Netzwerkvorrichtung, von "Radio Resource Control"-, RRC-, Signalisierung an das Endgerät, wobei die RRC-Signalisierung dazu verwendet wird, das Endgerät so auszulegen, dass es in der Lage ist, die Uplink-Daten direkt zu senden, ohne LBT durchzuführen.

6. Verfahren nach einem der Ansprüche 1 bis 5, wobei
ein Wertebereich des voreingestellten Zeitintervalls 10 µs bis 100 µs ist.

7. Datenübertragungsverfahren, angewandt auf ein System mit "Licensed-Assisted Access", LAA, wobei das Verfahren umfasst:
Empfangen, durch ein Endgerät, von Anzeigeinformationen, die von einer Netzwerkvorrichtung gesendet werden, wobei die Anzeigeinformationen dazu verwendet werden, das Endgerät anzuweisen, Uplink-Daten auf einer Kanalressource direkt zu senden, ohne LBT durchzuführen, und die Kanalressource eine nicht-lizenzierte Spektrumsressource ist, die durch die Netzwerkvorrichtung durch "Listen before Talk", LBT, vorbelegt ist, und ein erstes Zeitintervall zwischen einem Zeitpunkt, zu dem die Übertragung von Downlink-Daten auf der Kanalressource endet, und einem Zeitpunkt, zu dem für das Endgerät geplant ist, die Übertragung der Uplink-Daten zu beginnen, kleiner als oder gleich einem voreingestellten Zeitintervall ist;
direktes Übertragen, durch das Endgerät auf der Grundlage der Anzeigeinformationen, der Uplink-Daten auf der Kanalressource, ohne LBT durchzuführen;
**dadurch gekennzeichnet, dass**:
die maximale Kanalbelegungszeit T ist, eine Zeit, für die die Netzwerkvorrichtung die Downlink-Daten auf der Kanalressource überträgt, T1 ist, das erste Zeitintervall T2 ist und das voreingestellte Zeitintervall T3 ist, derart, dass eine Summe der Dauer von Übertragung von Downlink-Daten auf der Kanalressource und des ersten Zeitintervalls kleiner als die maximale Kanalbelegungszeit im LAA-System ist; und
die Netzwerkvorrichtung die Anzeigenachricht nur erzeugt, wenn T2<T3 und (T1 +T2)<T.

8. Verfahren nach Anspruch 7, wobei das Empfangen, durch ein Endgerät, von durch eine Netzwerkvorrichtung gesendeten Anzeigeinformationen umfasst:
Empfangen, durch das Endgerät, der von der Netzwerkvorrichtung gesendeten Anzeigeinformationen unter Verwendung eines "Downlink Control Channel", PDCCH.

9. Verfahren nach Anspruch 7, wobei das Empfangen, durch ein Endgerät, von durch eine Netzwerkvorrichtung gesendeten Anzeigeinformationen umfasst:
Empfangen, durch das Endgerät, der von der Netzwerkvorrichtung gesendeten Anzeigeinformationen unter Verwendung einer voreingestellten Ressource in der Kanalressource.

10. Verfahren nach Anspruch 9, wobei
die voreingestellte Ressource eine "Physical Hybrid Automatic Repeat Indicator Channel"-, PHICH-, Ressource in der Kanalressource ist.

11. Verfahren nach einem der Ansprüche 7 bis 10, wobei das Verfahren vor dem Empfangen, durch ein Endgerät, von durch eine Netzwerkvorrichtung gesendeten Anzeigeinformationen ferner umfasst:
Empfangen, durch das Endgerät, von durch die Netzwerkvorrichtung gesendeter "Radio Resource Control"-, RRC-, Signalisierung, wobei die RRC-Signalisierung dazu verwendet wird, das Endgerät so auszulegen, dass es die Uplink-Daten direkt sendet, ohne LBT durchzuführen.

12. Verfahren nach einem der Ansprüche 7 bis 11, wobei
ein Wertebereich des voreingestellten Zeitintervalls 10 µs bis 100 µs ist.

## Revendications

1. Procédé de transmission de données, appliqué à un système d'accès assisté par licence, LAA, dans lequel le procédé comprend de :
générer (210), par un dispositif de réseau, des informations d'indication, dans lequel les informations d'indication sont utilisées pour ordonner à un dispositif terminal de transmettre directement des données de liaison montante sur une ressource de canal sans effectuer de LBT, la ressource de canal est une ressource de spectre sans licence préemptée par le dispositif de réseau par écoute avant de parler, LBT, et un premier intervalle de temps entre un moment où la transmission des données de liaison descendante sur la ressource de canal se termine et un moment où le dispositif terminal est programmé pour démarrer la transmission des données de liaison montante est inférieur ou égal à un intervalle de temps prédéfini ;
envoyer (220), par le dispositif de réseau, les informations d'indication au dispositif terminal ; et
**caractérisé en ce que** :
le temps d'occupation de canal maximal est T, un temps pendant lequel le dispositif de réseau transmet les données de liaison descendante sur la ressource de canal est T1, le premier intervalle de temps est T2, et l'intervalle de temps prédéfini est T3, de sorte qu'une somme de la durée de la transmission des données de liaison descendante sur la ressource de canal et du premier intervalle de temps est inférieure au temps d'occupation de canal maximal dans le système LAA ; et
le dispositif de réseau génère le message d'indication uniquement lorsque T2 <T3 et (T1+T2)<T.

2. Procédé selon la revendication 1, dans lequel l'envoi, par le dispositif de réseau, des informations d'indication au dispositif terminal comprend de :
envoyer, par le dispositif de réseau, des informations d'indication au dispositif terminal en utilisant un canal de commande de liaison descendante PDCCH.

3. Procédé selon la revendication 1, dans lequel l'envoi, par le dispositif de réseau, des informations d'indication au dispositif terminal comprend de :
envoyer, par le dispositif de réseau, les informations d'indication en utilisant une ressource prédéfinie dans la ressource de canal.

4. Procédé selon la revendication 3, dans lequel
la ressource prédéfinie est une ressource de canal d'indicateur de répétition automatique hybride physique, PHICH, dans la ressource de canal.

5. Procédé selon l'une quelconque des revendications 1 à 4, dans lequel avant la génération, par un dispositif de réseau, d'informations d'indication, le procédé comprend en outre de :
envoyer, par le dispositif de réseau, une signalisation de gestion des ressources radio, RRC, au dispositif terminal, dans lequel la signalisation RRC est utilisée pour configurer le dispositif terminal pour être capable d'envoyer directement les données de liaison montante sans effectuer de LBT.

6. Procédé selon l'une quelconque des revendications 1 à 5, dans lequel une plage de valeurs de l'intervalle de temps prédéfini est de 10 µs à 100 µs.

7. Procédé de transmission de données, appliqué à un système d'accès assisté par licence, LAA, dans lequel le procédé comprend de :
recevoir, par un dispositif terminal, des informations d'indication envoyées par un dispositif de réseau, les informations d'indication étant utilisées pour ordonner au dispositif terminal de transmettre directement des données de liaison montante sur une ressource de canal sans effectuer de LBT, et
la ressource de canal est une ressource de spectre sans licence préemptée par le dispositif de réseau par écoute avant de parler, LBT, et un premier intervalle de temps entre un moment où la transmission de données de liaison descendante sur la ressource de canal se termine et un moment où le dispositif terminal est programmé pour démarrer la transmission des données de liaison montante est inférieur ou égal à un intervalle de temps prédéfini ;
transmettre directement, par le dispositif terminal sur la base des informations d'indication, les données de liaison montante sur la ressource de canal sans effectuer de LBT ;
**caractérisé en ce que** :
le temps d'occupation de canal maximal est T, un temps pendant lequel le dispositif de réseau transmet les données de liaison descendante sur la ressource de canal est T1, le premier intervalle de temps est T2, et l'intervalle de temps prédéfini est T3, de sorte qu'une somme de la durée de la transmission des données de liaison descendante sur la ressource de canal et du premier intervalle de temps est inférieure au temps d'occupation de canal maximal dans le système LAA ; et
le dispositif de réseau génère le message d'indication uniquement lorsque T2 <T3 et (T1 +T2)<T.

8. Procédé selon la revendication 7, dans lequel la réception, par un dispositif terminal, d'informations d'indication envoyées par un dispositif de réseau comprend de :
recevoir, par le dispositif terminal, les informations d'indication envoyées par le dispositif de réseau en utilisant un canal de commande de liaison descendante, PDCCH.

9. Procédé selon la revendication 7, dans lequel la réception, par un dispositif terminal, d'informations d'indication envoyées par un dispositif de réseau comprend de :
recevoir, par le dispositif terminal, les informations d'indication envoyées par le dispositif de réseau en utilisant une ressource prédéfinie dans la ressource de canal.

10. Procédé selon la revendication 9, dans lequel
la ressource prédéfinie est une ressource de canal d'indicateur de répétition automatique hybride physique, PHICH, dans la ressource de canal.

11. Procédé selon l'une quelconque des revendications 7 à 10, dans lequel, avant de recevoir, par un dispositif terminal, des informations d'indication envoyées par un dispositif de réseau, le procédé comprend en outre de :
recevoir, par le dispositif terminal, une signalisation de gestion des ressources radio, RRC, envoyée par le dispositif de réseau, la signalisation RRC étant utilisée pour configurer le dispositif terminal pour envoyer directement les données de liaison montante sans effectuer de LBT.

12. Procédé selon l'une quelconque des revendications 7 à 11, dans lequel
une plage de valeurs de l'intervalle de temps prédéfini est de 10 µs à 100 µs.
